(19) Europäisches Patentamt
European Patent Office
Office européen des brevets

(11) EP 0 850 698 A2

(12) **EUROPÄISCHE PATENTANMELDUNG**

(43) Veröffentlichungstag:
**01.07.1998 Patentblatt 1998/27**

(51) Int Cl.⁶: **B05D 1/28**, B05D 5/06

(21) Anmeldenummer: **97890229.4**

(22) Anmeldetag: **18.11.1997**

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: **23.12.1996 AT 2252/96**

(71) Anmelder: **Constantia-Iso Holding Aktiengesellschaft
1010 Wien (AT)**

(72) Erfinder: **Haschke, Heinz Dr.
2542 Kottingbrunn (AT)**

(74) Vertreter: **Dungler, Karin
Isovolta
Österreich. Isolierstoffwerke AG
Industriezentrum NÖ-Süd
Isovoltastrasse 3
2355 Wiener Neudorf (AT)**

(54) **Einschicht-Mehrzonen-Urethanisierungs Beschichtungsverfahren**

(57) Die Erfindung betrifft ein Beschichtungsverfahren , welches zur Herstellung eines dekorativen Formteils dient, umfassend eine Kernschicht sowie diese ein- oder beidseitig umgebende witterungsbeständige Dekorschicht(en), die einen durch Urethanisierung herstellbaren Einschicht-Mehrzonen Verbundaufbau aufweisen, wobei in einem 1. Schritt auf eine Trägerfolie, bestehend aus mit Isocyanatgruppen reaktionsfähigen Aminoplast- oder Phenoplast imprägnierten Trägermaterialien ein gesättigtes Hydroxylgruppen-hältiges wasserdispergierbares Polyacrylat oder ein dementsprechender gesättigter Hydroxylgruppen-hältiger Polyester im Gemisch mit stöchiometrisch untergeordneten Mengen an radikalisch nachreagierbaren Monomeren zusammen mit einem Di- und/oder Poly-Isocyanat aufgebracht wird und in einem 2. Schritt die urethanisierende Vernetzung durch Reaktion der Hydroxylgruppen der Polymeren und eventuell eingesetzter Monomere in üblicher Weise durchgeführt wird und danach in einem 3. Schritt die radikalische Nachvernetzung der Doppelbindungen der acrylischen Monomeren bewirkt wird, wobei gleichzeitig mit dieser radikalischen Nachvernetzung oder danach dieses System auf das zu beschichtende Trägermaterial aufgepreßt wird.



Printed by Jouve, 75001 PARIS (FR)

## Beschreibung

Gegenstand der Erfindung ist ein Beschichtungsverfahren durch Urethanisierung zu einem Dreistoff-drei-Zonen-Einschicht-Verbundaufbau unter kombinierter Polyadditions/Polykondensations-härtung und zusätzlicher radikalischer Polymerisation. Die so erhaltenen Folien werden auf den zu beschichtenden Gegenstand aufgepreßt.

Es ist bekannt, daß Aminoplastharze wie Harnstoff-Formaldehydharze oder Melamin-Formaldehydharze als äußerste Oberflächen von Beschichtungssystemen gute Kratzfestigkeiten aufweisen. Insbesondere Melaminharzoberflächen können Kratzfestigkeiten von bis zu ca. 10 Newton (abgekürzt N; nach DIN 53799, Teil 10) bringen.

Bei der Härtung von Aminoplastharzen handelt es sich chemisch um einen Polykondensationsvorgang, da Wasser als Kondensations-Nebenprodukt abgespalten wird. Der Härtungsprozeß von Harnstoffen und Melaminen verläuft dabei über zuerst noch schmelzbare und in Lösungsmitteln wie Dimethylformamid lösliche Kondensations-Zwischenprodukte, welche eine große Zahl freier, noch reaktionsfähiger Methylolgruppen aufweisen (sogenannter B-Zustand). Erst bei längerer Reaktionszeit mit dem Kondensationsmittel, welches in der Regel Formaldehyd ist, und insbesondere in einem zweiten Wärmebehandlungsschritt, reagieren diese Produkte zu vollständig unlöslichen, unschmelzbaren, hochvernetzten Endprodukten, an denen keine Molekulargewichtsbestimmung mehr möglich ist (Encycl. of Polym. Sci. and Tech. Vol.2 "Amino-Resins").

Allerdings neigt das Triazinsystem des Melamins bei Bewitterung zur Hydrolyse bis zur Cyanursäure, wodurch es zu Abbau-, Spannungsriß- und Vergrauungseffekten kommt, weshalb derartige Produkte nur sehr schlecht witterungsbeständig sind.

Eine ähnlich schlechte Witterungsbeständigkeit weisen Beschichtungssysteme auf Basis von Harnstoffharzen auf.

Andererseits haben sich Aminoplastharze als Imprägniermittel für Dekorpapiere gut bewährt, welche nach dem Auflaminieren oder Aufpressen auf den zu beschichtenden Gegenstand wie Schichtpreßstoff-, Span- oder Faserplatten, einen guten Verbund mit dem Trägermaterial ergeben. Dadurch werden auch - abgesehen von der mangelhaften Bewitterungsbeständigkeit - ausgezeichnete Dekorteile und -platten bereitgestellt.

Analoges kann mit Phenolharzen als Dekorpapier-Imprägniermittel erzielt werden; allerdings sind auch Phenolharze als äußerste Schichten nicht bewitterungsfest und vergilben sehr schnell unter Licht- und Lufteinwirkung.

Ferner ist auch bekannt, daß Acrylatharze und auch Polyesterharze sowie die Polymeren aus Esteracrylaten, Urethanacrylaten, Ätheracrylaten und Epoxyacrylaten in der Regel wesentlich bessere Bewitterungseigenschaften aufweisen. Allerdings sind solche Systeme wiederum zur Imprägnierung von Dekorpapieren bei weitem nicht so gut geeignet wie die vorgenannten Aminoplast- bzw. Phenoplastharze, da sie nur relativ weiche, nicht sehr kratzfeste Überzüge ergeben.

Insoweit sind mit den herkömmlichen aus einer einzigen Schicht einheitlicher chemischer Harz zusammensetzungen bestehenden Beschichtungssystemen keine zufriedenstellenden Ergebnisse für die Beschichtung von Formteilen und Platten für den Außeneinsatz zu erzielen.

Es war somit naheliegend, die guten Imprägniereigenschaften von Aminoplast- und Phenolharzen mit den guten Bewitterungsfestigkeiten von Acrylaten, Polyestern und auch Polyesteracrylaten zu kombinieren.

Am einfachsten ist dabei das Auflaminieren einer fertigen witterungsbeständigen Polyacrylat-Folie als Deck- und Schutzschicht auf das Trägermaterial, das bereits mit einem mit Aminoplast-oder Phenoplastharzen imprägnierten Dekorpapier beschichtet ist. Damit verbindet man die Vorteile einer gut auf dem Trägermaterial haftenden Dekorpapieroberfläche und den von Aminoplast- und Phenoplast-Imprägnierungen bekannten guten Dekorpapiereigen-schaften, mit den Vorteilen der bewitterungsfesten Kunstharz-schichten, in welche bei Bedarf - beispielsweise zum Schutz der UV-empfindlichen phenolischen Imprägnierharze - auch noch UV-Filter-Substanzen eingebaut werden können.

Folgende Skizze zeigt zur besseren Erläuterung des Beschichtungssystems dessen Prinzip:

$-(CH_2-CH-)_n$
|
COOR

| Schicht 2 = Polyacrylat (Folie)

Phasengrenze (Schichtengrenze)

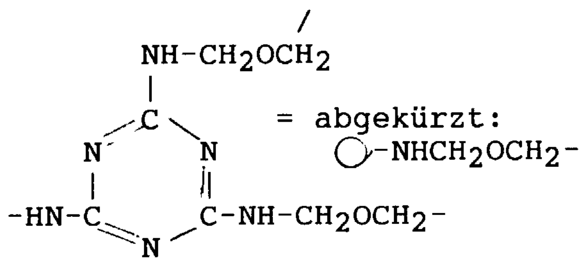

= abgekürzt: $-NHCH_2OCH_2-$

| Schicht 1 = Aminoplast (Papierimprägnat)

Eine besonders vorteilhafte Ausführungsform eines solchen Kombinationsverfahrens nach dem Laminierprinzip wird in der DE-A 30 10 060 beschrieben, wobei eine obere, mit einem durch Elektronenstrahlen gehärteten Lack lackierte Folie zusammen mit einer darunterliegenden Trägerfolie zwischen Walzenpaaren und der Ausbildung eines Schichtpreßstoffes laminiert werden.

Dieses Beschichtungssystem besteht nunmehr aus zwei Schichten von Harzen mit voneinander unterschiedlicher chemischer Konstitution.

Bei diesem "2-Stoff-2-Schichten-Beschichtungssystem" ist unter dem Mikroskop an einem Querschnitt deutlich eine scharfe, gerade Trennlinie zwischen den beiden Stoffschichten, nämlich der Trägerfolie und der Dekorfolie feststellbar. Es handelt sich dabei um die Zone des Aminoplast- oder Phenoplast-Imprägnat-Untergrundes bzw. um die Zone der Acrylat-Deckschicht. Dabei wird zwar eine gegen Bewitterung geschützte Oberfläche erreicht, allerdings mit gravierenden Nachteilen.

Die für die bewitterungsfeste Außenschicht infragekommenden Polymer-Systeme sind die bekannten bewitterungsfesten Systeme wie Polyacrylate, also Systeme, die mit nur ca. 2 - 3 N wesentlich weniger kratzfest als Aminoplast- oder Phenoplast-Oberflächen sind. Ferner ist der durch die Laminierung erzeugte Verbund im wesentlichen nur durch physikalische Adhäsionseffekte an den Grenzschichten von Dekorfolie und Trägerfolie erzeugt. Von solch einem Adhäsionseffekt sind im wesentlichen jeweils nur die äußersten, monomolekularen Schichten an den Grenzflächen betroffen. Dementsprechend führt jede mechanische Verletzung der äußersten Schicht wieder zu einem Witterungsangriff an dieser sowie zur Unterwanderung der äußersten Dekorschicht. Dabei bewirken Diffusionsprozesse, insbesondere jener der Wasserdampf-Diffusion ausgehend von dieser Verletzungsstelle auch ein großflächigeres Ablösen der äußersten Laminatschicht, was unter anderem eine nachteilige Optik, insbesondere in der Außenanwendung bewirkt.

Ein weiteres Kombinationssystem wird in der DE-AS 29 47 597 vorgeschlagen. Dabei sollen die Vorteile von Aminoplastharzen als Imprägniermittel mit den witterungsbeständigen Eigenschaften von Acrylat-Systemen dadurch kombiniert werden, daß Gemische aus Acrylaten, Esteracrylaten, Epoxyacrylaten, Urethanacrylaten, Ätheracrylaten und ungesättigten Acrylatharzen, gegebenenfalls auch zusammen mit ungesättigten Acrylat-Monomeren in Kombination mit Aminoplastharzen als Überzugsgemische zur Herstellung einer äußersten, strahlenhärtbaren Schicht verwendet werden. Es entsteht dadurch ein einschichtiges, aus zwei oder mehreren miteinander nicht mischbaren und auch nicht durch chemische Reaktion miteinander kovalent gebundenen Harzen gebildetes Überzugssystem vom Typ eines "Zweistoff-1-Zonen (aber 2-Phasen)-1-Schicht-Systems", welches in der nachstehenden Skizze erläutert wird.

1 Zone

Gemisch von:

a) $-(CH_2-CH-)_n$
|
COOR

- Partikeln eingebettet in: (= Stoff 1)

Phasengrenze an den Partikeln

b) 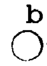 $-NHCH_2OCH_2-$
Matrix
(= Stoff 2)

Wegen der Nichtmischbarkeit derartiger weitgehend ausgehärteter Aminoplaste und auspolymerisierter Acrylate untereinander bedeutet dies, daß physikalisch-chemisch im fertigen Produkt zwar nur eine Zone vorliegt, sich diese aber aus einem Gemenge von zwei miteinander an sich nicht mischbaren Polymeren, daher 2 Phasen, zusammensetzt. In diesem Gemenge ist das eine Polymer mehr oder weniger fein dispers verteilt, aber mit deutlichen, scharfen Phasengrenzen an seinen Partikeloberflächen vom anderen Polymer, dem Matrix-Polymer, in welches es eingebettet ist, abgegrenzt. Durch solche Lösungsansätze lassen sich daher die erwünschten Eigenschaften der Mischungskomponenten nicht additiv vereinigen. Vielmehr weisen die fertigen Produkte im wesentlichen nur die schlechten Bewitterungsfestigkeiten der Aminoplaste mit den mangelhaften Kratzfestigkeiten der Acrylate auf.

Wesentlich günstiger hat sich dagegen eine dritte Art der 2-phasigen-2-schichtigen dekorativen Oberflächen bewährt. Wie in der EP-A 166 153 beschrieben, werden Aminoplast-freie, ungesättigte (Meth)acrylat-Schichten beispielsweise durch Lackierung als äußerste Schicht auf Phenoplast oder Aminoplast imprägnierte Dekorpapierschichten aufgebracht, wobei diese Aminoplast - oder Phenoplast-Schichten sich weder mit der darüber aufgebrachten Deckschicht vermischen - es bleibt immer eine durch eine im Mikroskop im Querschnitt deutliche erkennbare Trennlinie und damit eine deutlich abgegrenzte 2. Phase erhalten - noch chemisch in diese einreagieren. In einem weiteren Schritt werden die Deckschichten strahlengehärtet und danach in einem dritten Schritt bei relativ hohem Druck und bei Temperaturen von mindestens 80°C auf den zu beschichtenden Körper aufgepreßt. Es entsteht somit im wesentlichen ein physikalischer Verbund zwischen äußerster strahlenvernetzter (Rein-)-Acrylatphase und darunter-liegender, von dieser klar chemisch und physikalisch abgegrenzten Aminoplastphase, wobei durch die Elektronenstrahlhärtung die Acrylatschicht radikalisch auspolymerisiert und eventuell auch vernetzt ist, während die davon durch eine scharfe Phasengrenze abgesetzte Aminoplastschicht nach dem Verpressen für sich alleine zu einem Duroplasten auskondensiert ist.

In einer bevorzugten Ausführungsform dieses Verfahrens wird außerdem eine eventuelle Pigmentierung bzw. Dekorierung bereits in die Aminoplast-Unterschicht gegeben und als Acrylat-Decklack nur mehr ein unpigmentierter und damit leicht porenfrei auftragbarer Klarlack verwendet.

Ein derartiges System - wie durch die nachstehende Skizze näher erläutert - zeigt bei Bewitterung, wegen des im wesentlichen nur physikalischen Verbundes zwischen Decklackschicht und Untergrund, insbesondere bei geringfügigen Undichtigkeiten oder Verletzungen der Decklackschicht eine Unterwanderung der Decklackschicht, mit Neigung zu Vergrauungs- bis Abhebe-Effekten an der darunterliegenden Aminoplast-Schicht.

Außerdem ist der notwendige Zwischenschritt der Strahlenhärtung technisch sehr aufwendig.

Skizze zur Veranschaulichung des System-Prinzips:

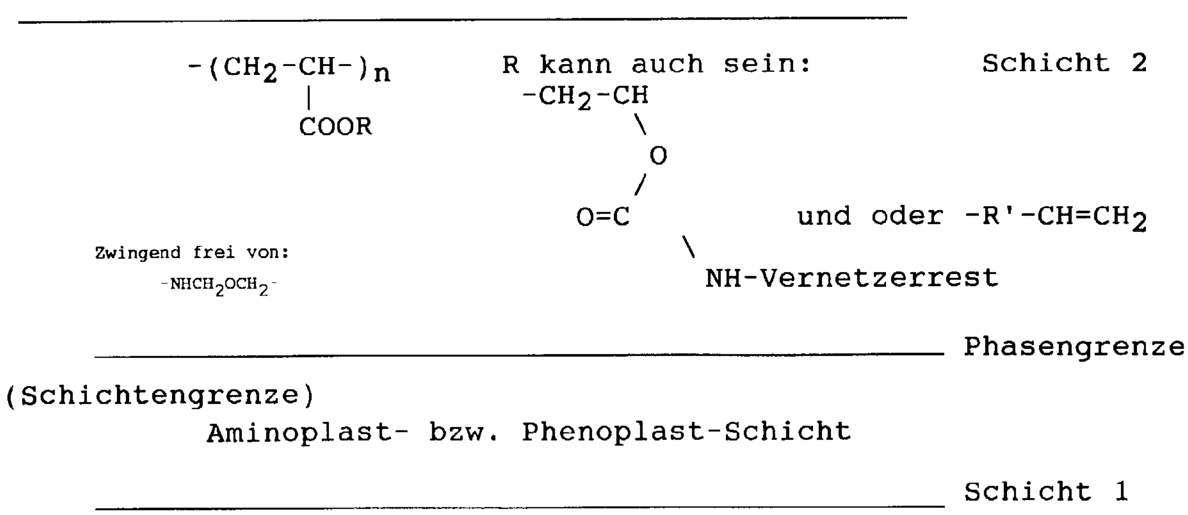


Durch den Verpreßvorgang wird je nach den lokalen Elastizitäten und Verformbarkeiten der beiden aufeinanderliegenden Schichten die Acrylatschicht unterschiedlich tief in die darunterliegende Aminoplast- oder Phenoplastschicht gedrückt, sodaß im mikroskopischen Querschnittsbild eine verzahnte Phasengrenze ähnlich wie bei Zahnrädern im Eingriff feststellbar ist; trotzdem ist aber eine, wenn auch nicht gerade, aber doch scharfe Phasengrenze wie auch im Zahnrädermodell feststellbar.

Mittels dieses Verfahrens werden dennoch eine gute Witterungsbeständigkeit erzielt und außerdem deutlich verbesserte Kratzfestigkeiten von bis zu 7 N.

Die strahlenchemisch nachhärtenden Verfahren erfordern jedoch einen eigenen Arbeitsgang mit relativ aufwendigen Apparaturen wie Elektronen- oder UV-Strahlern, so ist auch bekannt, daß insbesondere die durch Elektronenstrahlungshärtung hergestellten Systeme zur Spannungsrißbildung neigen. Dies ist dann der Fall, wenn Profilkörper beschichtet werden sollen und an eine horizontale Fläche unter einem stumpfen Winkel vertikale Flächen anschließen, sodaß die Folie einer starken mechanischen Beanspruchung bzw. Scherung ausgesetzt wird. Dabei kann der Lack an der äußeren Lackschicht der Folie auf Teilflächen entweder vollkommen abgeschert oder auf der Folie verschoben werden. Außerdem können Teile des Lackes abplatzen oder es können Mikrorisse im Lack entstehen. In jedem Fall führen diese Effekte zu einer Schwächung bis Zerstörung der Schutzwirkung des Lackes.

Fortschrittlich und wünschenswert wäre somit ein Verfahren, bei dem die Vorteile der positiven Eigenschaften der einzelnen Systeme wie Aminoplaste oder Phenoplaste für die Dekorpapierimprägnierung und jene der Acrylate für die äußerste Schutzschicht erhalten bleiben, zwischen beiden aber nicht bloß ein physikalischer, sondern auch ein inniger chemischer Verbund entsteht, sodaß tatsächlich nur mehr ein Einschichtsystem vorliegt, bei dem es unter keinen Umständen mehr zu einer Schichttrennung kommen kann. Darüberhinaus sollte auch noch eine Prozeßvereinfachung erreicht werden.

Diese Aufgabe wird durch ein Beschichtungsverfahren gelöst, bei dem durch Urethanisierung ein Einschicht-Dreizonen-Verbundaufbau hergestellt wird, wobei eine Folie, beispielsweise ein zu imprägnierendes Papier mit einem herkömmlichen Aminoplast wie Melaminharz imprägniert wird, wonach dieses Harz aber vorerst noch nicht voll ausgehärtet wird, sondern nur so weit vorgetrocknet wird, daß es noch deutlich mittels seiner freien Methylolgruppen mit Isocyanaten reagieren kann. Auf dieses mit B-Phase-Harz-imprägnierte Papier wird erfindungsgemäß ein 2-Komponenten-Lack, bestehend aus einem Gemisch eines Polyhydroxy-polyacrylats (PA), mit einem Di- und/oder Poly-Isocyanat aufgebracht, wodurch während der nachfolgenden Reaktion nicht nur das Polyacrylat durch Reaktion seiner Hydroxylgruppen mit dem Isocyanat vernetzt wird, sondern ein Teil des Isocyanates auch mit den noch reaktionsfähigen Methylolgruppen aus dem B-Phasen-Aminoplast-Untergrund reagiert. In der Grenzschicht zwischen B-Phasen-Aminoplast, welcher noch fließfähig ist, und dem Decklack tritt dabei sogar noch eine innige Vermischung auf, welche auch nach Aushärtung der Systeme erhalten bleibt, da die Harze durch die Interaktion mit dem Isocyanat chemisch kovalent miteinander verbunden sind. In einem nachfolgenden Schritt werden die so erhaltenen Folien auf den zu beschichtenden Gegenstand aufgepreßt.

Dieses System ist neben der Trägerfolie aus folgenden Stoffen aufgebaut: 1 = überwiegend Aminoplast, dieser allmählich übergehend über homogene Mischungen in Stoff 2 = Aminoplast mit urethanisiert anaddiertem Isoyanat, dieser allmählich übergehend über homogene Mischungen in Stoff 3 = ein Reaktionsprodukt aus Isocyanat mit Aminoplast einerseits und mit Polyacrylat andererseits (polymerer Urethanaminoplast) und dieser allmählich übergehend über homogene Mischungen in Stoff 4 = Isocyanat-vernetztes Polyacrylat. Die äußerste Schicht bei diesem Beschichtungssystem besteht somit aus mehreren Zonen, aber - wegen der allmählichen Übergänge und der durch die chemischen Reaktionen des Isocyanats mit Aminoplast und mit Polyacrylat (PA) bewirkten Phasenvermittlung - eben nur aus einer Phase, welche eben physikalisch chemisch als einheitliche Aminoplast-hältige Polyacrylat-Schicht zu definieren ist.

Skizze zur Veranschaulichung der äußersten Schicht des System-Prinzips:

---

Urethanacrylat darin gelöst Zone 1
Übergangs-Urethanacrylat-URETHANAMINOPLAST-Mischphase )
URETHANAMINOPLAST-URETHANACRYLAT-Reinphase ) Zone 3
Übergangs-URETHANAMINOPLAST-Aminoplast-Mischphase )
Aminoplast Zone 2
insgesamt nur eine Schicht

---

Im Gegensatz zu den herkömmlichen Verfahren wird beim erfindungsgemäßen Verfahren somit eine neue dritte Komponente als chemische Verbindungskomponente ins Spiel gebracht, nämlich der Stoff 3, ein Urethan-Aminoplast. Dieser ist ein Reaktionsprodukt aus nur teilweise ausreagiertem Aminoplast, wobei dessen Methylolgruppen mit dem Isocyanat-Vernetzer in Anwesenheit eines ebenfalls mit Isocyanat reaktionsfähigen PA reagiert haben.

Durch Phasen-Vermittlung durch diesen Urethan-Aminoplast bzw. infolge der kovalenten Vernetzung können nicht mehr mehrere voneinander ablösbare Schichten auftreten, sondern es wird ein fließender Übergang in der chemischen Zusammensetzung ausgehend von reinem Aminoplast bzw. Phenoplast bis zum reinen Urethanacrylat bereitgestellt ("3-Zonen"). Im genannten ZahnräderModell entspricht dies den miteinander an den Zahnrad-Eingriff-stellen verschweißten Zahnrädern.

Damit bieten derartige Einschicht-3-Zonen-Urethanisierungsamino-plast-Systeme sehr gute Bewitterungsfestigkeiten; wegen der urethanisierten kovalenten Anbindung der Aminoplast-Komponente ist auch die Kratzfestigkeit verbessert. Allerdings wird diese trotzdem noch von den relativ weichen Acrylat-Komponenten bestimmt.

Derartige Vernetzungen können über radikalische Polymerisation von Doppelbindungen erzielt werden, welche entlang der Molekülkette der Harzkomponente des Decklackes ("Decklack-PA" oder "Decklack-Polyester "PE)") vorliegen und aus Monomeren stammen, welche neben ihren für die Harherstellung notwendigen funktionellen Gruppen eine noch geringere Reaktivität aufweisen, sodaß sie bei der Polymerisation zur Bildung des Harzes noch erhalten bleiben. Comonomere, welche geeignet sind zur Herstellung derartiger ungesättigter Polyacrylate (UPA) sind beispielsweise Allylacrylat oder Vinylacrylat; geeignet für die Herstellung derartiger ungesättigter Polyester (UPE) sind beispielsweise Fumarsäure oder Maleinsäure als ungesättigte Säurekomponenten oder Trimethylolpropanmonoacrylat als ungesättigte Alkoholkomponenten.

Einschicht-3-Zonen-Urethanaminoplast-Systeme mit derartigen UP-oder UPA-Basisharzen bringen bei Verpressung nach Strahlen-induzierter radikalischer Vernetzung bereits verbesserte Kratzfestigkeiten. Sie sind jedoch, bedingt durch die Anzahl und die Verteilung der Doppelbindungen in der Polymerkette relativ aufwendig herzustellen.

Aufgabe der Erfindung ist es daher, das vorgenannte Verfahren zur Herstellung eines Einschicht-Mehrzonenverbundes leichter durchführbar auszugestalten.

Erfindungsgemäß wird daher ein Beschichtungsverfahren durch Urethanisierung zu einem Einschicht-Mehrzonen-Verbundaufbau vorgeschlagen, welches dadurch gekennzeichnet ist, daß in einem 1. Schritt auf eine Trägerfolie, bestehend aus mit Isocyanatgruppen reaktionsfähigem Aminoplast- oder Phenoplast imprägnierten Trägermaterialien ein gesättigtes, 5 bis 40 Mol% OH-Gruppen, vorzugsweise 15 bis 35 Mol% OH-Gruppen bezogen auf die durchschnittliche Monomereinheit enthaltendes Hydroxyroxy-Polyacrylat oder ein dementsprechender gesättigter Hydroxy-Polyester im Gemisch mit stöchiometrisch untergeordneten Mengen von 1 - 30 Mol%, vorzugsweise 2 - 10 Mol% insbesondere 3 - 5 Mol% (bezogen auf die mittleren Monomereinheiten) an radikalisch nachreagierbaren Monomeren wie Trime-thylolpropandi- und/oder - triallyläther (TMPDAE, TMPTAE), und/oder Dipropylenglycoldial-lyläther (DGPDAE), vorzugsweise di- oder polyfunktionelle Acrylate wie Trimethylolpropantriacrylat (TMPTA), Pentaerythrittetraacrylat (PETA), Dipentaerythrithexaacrylat (DPEHA) und/oder die Acrylsäureester von deren oligomeren Äthyxylierungsprodukten, - besonders bevorzugt sind Gemische derartiger Monomerer mit wenigstens 10 Mol% (im Monomerengemisch) von Hydrxyacrylaten wie Trimethylolpropandiacrylat (TMPDA), Glycerindiacrylat (GDA), propoxylierte Glycerin-Di/Triacrylate (GPD/TA) und/oder Pentaerythrittriacrylat (PETrA) und/oder Dipentaerythritpentaacrylat (DPEPA) zusammen mit einem Di- und/oder Poly-Isocyanat aufgebracht wird und daß in einem 2. Schritt die urethanisierende Vernetzung durch Reaktion der Hydroxylgruppen aus dem Polymeren und eventuell eingesetzter Monomere in üblicher Weise - beispielsweise durch Erwärmung oder auch einfach durch Einhaltung der notwendigen Reaktionszeit - durchgeführt wird und daß danach in einem 3. Schritt die radikalische Nachvernetzung der Doppelbindungen der acrylischen Monomeren bewirkt wird, wobei gleichzeitig mit dieser radikalischen Nachvernetzung oder danach dieses System auf das zu beschichtende Trägermaterial aufgepreßt wird.

Damit können dekorative Formteile hergestellt werden, wobei auf eine Kernschicht ein- oder beidseitig die vorgenannten Folien aufgepreßt werden.

Es wurde somit überraschenderweise ein bewitterungs- und kratzfestes Beschichtungssystem bereitgestellt, welches keine ungesättigten Basisharze enthält.

Bevorzugt sind als Basispolymere Hydroxypolyacrylate. Besonders bevorzugt sind solche mit Polymerisationsgraden, bezogen auf die mittlere Monomereneinheit im Polymermolekül, zwischen 50 und 1000, besonders bevorzugt mit Polymerisationsgraden zwischen 300 und 850.

Bevorzugt ist die Anwendung eines stöchiometrischen Isocyanat-Überschusses über den Bedarf der im Basispolymer und eventuell eingesetzten Hydroxyacrylat-Monomeren enthaltenen Hydroxylgruppen hinaus, sodaß auch eine chemische, urethanisierende Anbindung an die Methylolgruppen des Melaminharz- oder Phenoplastharz-Untergrundes erfolgt. In diesem Falle hat es sich als besonders vorteilhaft erwiesen, wenn die Lackmischung bestehend aus Basispolymer, radikalisch polymerisierbaren Monomeren und Isocyanat derart auf den Aminoplast- oder Phenoplast-Untergrund aufgebracht werden, daß dabei an der Grenzschicht zwischen Aminoplast bzw. Phenoplast und Polyacrylat- (PA)- bzw. Polyester- (PE)-Isocyanatsystem eine deutliche Vermischung, gegenseitige Eindiffusion und Reaktion ermöglich werden.

Vereinfachte Skizze zur Veranschaulichung des System-Prinzips:

```
-(CH2-CH-)x-(CH2-CH-)y-(CH2-CH-)z (oder auch entsprechende
     |          |         |      ungesättigte Hydroxy-
Polyester)
     COOR       COOR1-O*)  R2-CH=CH2
                     \
                      C=O        bzw. deren radikalische
                     /           Vernetzungsprodukte
                   HN               *)  Hydroxyacrylatrest
                     \             **)  Rest d. Vernetzer-
                      R3**)             -Di-bzw.
Polyisocyanats
                     /            ***) Rest der Aminoplast-B-
                   HN                  -Zustand-
Methylolgruppen
                     \
                      C=O
                     /
          -NH-CH2O***)
          Aminoplastrest
```

Daneben treten im Falle, daß OH-Gruppen-hältige Monomere im Gemisch mit dem PA bzw. PE verwendet werden, auch noch deren urethanisierende Anbindungen über den Isocyanatrest an das PA bzw. dem PE bzw. an die Methylolgruppen des Aminoplast- bzw. Phenoplast-Untergrundes auf.

Man erhält nach dem erfindungsgemäßen Verfahren somit eine an der Grenzschicht vom Basismaterial zur Folie ganz analog zu herkömmlichen Aminoplast- oder Phenoplast-imprägnierten Dekorpapieren eine gut haftende Beschichtung, welche harzchemisch nur als eine einzige Außenschicht definiert werden kann, da sie sich im mikroskopischen Querschnitt zwar als Mehr-Zonen-(insbesondere 3 Zonen)-Schicht aber ohne scharfe, eindeutige Phasengrenzen-Trennlinie erweist. Dabei ist mit Infrarot-Mikroskop-Spektrometrie ein allmählicher Übergang der Schichten, ausgehend vom durchgehärteten bis hin zu dem vernetzten PA bzw. PE wie folgt feststellbar:

Zone 1 aus ausgehärtetem Phenoplast bzw. Aminoplast mit einem Bereich, in dem (a) urethanisierter Aminoplast bzw. Phenoplast gelöst bzw. dispergiert ist, weiter zu einem Bereich, der hauptsächlich aus einem neuen Stoff besteht, welcher chemisch anzusprechen ist als (b) Urethan-Aminoplast- bzw. Urethan-Phenoplast-Urethan-PA bzw. -PE (="Stoff 3") und beidseitig durch das polyfunktionelle Isocyanat verbunden ist, darüber eine (c) Lösung von Urethan-PA bzw. Urethan-PE in Urethan-Aminoplast-PA bzw. -PE, bzw. Urethan-Phenoplast-Urethan-PA bzw. -PE und deren radikalische Vernetzungsprodukte (alle 3 Bereiche a,b,c = Zone 2), bis zur Außenzone - die aber keine separate Schicht darstellt - eines auch noch radikalisch vernetzten PA bzw. PE (= Zone 3).

Die nur mehr spektroskopisch anhand ihrer allmählich variierenden chemischen Zusammensetzung feststellbaren, allmählichen Stoffzusammensetzungs-Änderungen folgen nicht parallel der Trägermaterialoberfläche, sondern - je nach den unterschiedlichen Eindringtiefen bei der Vermischung bzw. Eindiffusion von Stoff 1 in Stoff 2 vor der Urethanisierung - einem außer a) der chemischen Verbindung und b) der tief in die einzelnen Zonen gegenseitig eindringenden Durchmischungen auch noch c) einem verzahnten Verlauf der Übergänge der chemischen Zusammensetzungen.

Derartige Produkte unterscheiden sich somit grundsätzlich von den Produkten des Standes der Technik, bei welchen immer nur verschiedene Stoffe miteinander physikalisch kombiniert werden, während beim erfindungsgemäßen Verfahren die Beschichtungsmaterialien durch eine echte chemische Reaktion miteinander verbunden werden und erst dann radikalisch vernetzt werden und im fertigen Produkt somit auch andere Stoffe, eben solche wie die genannten radikalisch-vernetzten Urethan-Aminoplaste bzw. Urethan-Phenoplaste vorliegen. Demgemäß zeigen solche Produkte sogar dann, wenn die Oberfläche so weit angeschliffen wird, daß teilweise die äußerste Zone voll abgetragen wurde, und die darunterliegende Urethanaminoplast-Urethan bzw. Urethanphenoplast bzw. sogar auch teilweise bis auf die reine unterste Aminoplast- bzw. Phenoplast-Schicht abgetragen wurde, überraschend gute Bewitterungseigenschaften. An den Stellen, wo bis auf die reine Urethanaminoplast- bzw. Urethanphenoplast-Zone durchgeschliffen wurde, immer noch wesentlich verbesserte Bewitterungseigenschaften als bei normalen Aminoplast-Oberflächen, und sogar an den Stellen, wo auch die Urethanaminoplast- bzw. Urethanphenoplast-Zone weggeschliffen wurde, zwar die übliche Bewitterungsanfälligkeit der Aminoplast- oder Phenoplast-Oberflächen, aber keinerlei Unterwanderung an den Grenzen, wo Urethan-aminoplast-PA bzw. Urethanphenoplast-PE noch verblieben ist.

Als Trägerfolien kommen nach dem erfindungsgemäßen Verfahren infrage: Papier, welches mit Aminoplast- bzw. Phenoplastharzen imprägnierbar ist, aber auch Faservliese auf Basis von Cellulose-, Holz- oder Kunststoff-Fasern oder auf Basis von Gemischen davon. Vorzugsweise wird sogenanntes Dekorpapier eingesetzt.

Folgende Trägermaterialien können in das erfindungsgemäße Verfahren eingesetzt werden:

Schichtpreßstoffplatten, Holzspanplatten, Faserplatten, mittel-oder hochverdichtete (MDF- oder HDF)-Holzfaserwerkstoffe oder Profilkörper aus derartigen Materialien, vorzugsweise Schichtpreßstoffplatten oder Phenolharz-gebundene, verdichtete Profilkörper aus Holzfasern.

Nach dem erfindungsgemäßen Beschichtungsverfahren ist es vorteilhaft, zur Imprägnierung der Trägerfolie ein Phenolharz zu verwenden, und zwar eines in wäßriger Dispersion. Dieses wird nach der Imprägnierung der Trägerfolie nur so weit vorkondensieren gelassen, bis ein noch mit Isocyanatgruppen reaktionsfähiger, bei Temperaturen oberhalb 80°C, vorzugsweise oberhalb 100°C, noch fließfähiger Zustand erreicht ist.

Besonders bevorzugt ist die Verwendung eines wäßrigen Melaminharzes zur Imprägnierung der Trägerfolie, wobei dieses nach Imprägnierung der Trägerfolie nur so weit vorkondensieren gelassen wird, bis ein noch mit Isocyanatgruppen reaktionsfähiger, bei Temperaturen oberhalb 80°C, vorzugsweise oberhalb 100°C, noch fließfähiger Zustand erreicht ist.

Insbesondere ist es vorteilhaft, das Aminoplastharz, vorzugsweise ein Melamin-Formaldehydharz vor dem Auftrag des PA- bzw. des PE-Lack-Systems auf einen Gesamt-Wasser-Restgehalt von 5 bis 25 Gew-%, vorzugsweise auf 10 bis 15 Gew-%, vorzukondensieren.

Als ganz besonders vorteilhaft hat sich erwiesen, die Vorkondensation der Aminoplaste bzw. Phenoplaste mit denen die Trägerfolie imprägniert wurde, vor dem Auftrag des PA- bzw. PE-Lacksystems nur so wenig vorzukondensieren, daß sie einen NCO-Titer von mindestens 3, vorzugsweise von mindestens 6, insbesondere von mindestens 7 Milliäquivalenten NCO pro Quadratmeter aufweist.

Ganz besonders vorteilhaft hat es sich außerdem erwiesen, die Vorkondensation der Aminoplaste bzw. Phenoplaste, mit denen die Trägerfolie imprägniert wurde, jedenfalls so weit zu führen, daß sie einen NCO-Titer von maximal 25, vorzugsweise von maximal 20, insbesondere von maximal 15 Milliäquivalenten NCO pro Quadratmeter, aufweist.

Der vorgenannte NCO-Titer des Aminoplast- bzw. Phenoplast-Untergrundes kann dadurch bestimmt werden, daß man eine Probe von 1 $dm^2$ des vorkondensierten Aminoplasten - nach Schocktrocknung wie unten beschrieben - mit einer Lösung des im Verfahren anzuwendenden Isocyanats übergießt und nach Erwärmen auf Reaktionstemperatur den Isocyanatverbrauch bezogen auf diese Normfläche durch Zurücktitration mit Di-n-Butylamin bestimmt und dann auf 1 Quadratmeter umrechnet. Diese Bestimmung kann gleich im Zuge der oben beschriebenen Bestimmung des Aminoplast- bzw. Phenoplast-Imprägnat-Brutto-Netto-Differenz-Anteils erfolgen.

Die erfindungsgemäß insgesamt anzuwendende Isocyanat-Menge ergibt sich aus a) dem stöchiometrischen Bedarf des PA- bzw. PE-Systems inklusive eventuell vorhandener Hydroxylgruppen aus den im Gemisch mit den Basispolymeren vorliegenden radikalisch polymerisierbaren Monomeren, an mit Isocyanat-Gruppen reaktionsfähigen Gruppen, vorzugsweise von deren OH-Gruppen ausgedrückt in Mol-% OH plus b) dem einzukalkulierenden und in einem Vorversuch (s.unten) zu bestimmenden Isocyanatverlust durch Nebenreaktionen wie Hydrolyse unter den Reaktionsbedingungen).

Bevorzugt wird dazu noch c) ein "signifikanter NCO-Überschuß" angewandt.

Dieser "signifikante NCO-Überschuß" über den stöchiometrischen Bedarf nach a) und nach b) hinaus, ist von der OH-Zahl bzw. den Mol-% OH Gehalt des PA- bzw. PE-Systems inklusive eventuell im Gemisch damit angewendeter Hydroxyacrylat-Monomerer abhängig und soll betragen:

$$\text{Mol-\% NCO-Überschuß} = A / \text{Mol-\% OH},$$

wobei A = 20 bis 500, vorzugsweise A = 200 bis 400.

Zur Einstellung des für das erfindungsgemäße Verfahren notwendigen Isocyanat-Gesamt-Überschusses (="Brutto-Überschuß") wird in einem Vorversuch der Anteil an Isocyanat, welcher unter Verfahrensbedingungen durch andere als die gewünschten Hauptreaktionen verbraucht wird bzw. dadurch verloren geht, bestimmt werden, und ist dieser Anteil dann bei Anwendung des erfindungsgemäßen Verfahrens zum berechneten Netto-Überschuß dazuzuaddieren, um den notwendigen Isocyanat-Brutto-Bedarf zu ermitteln. Dabei kann man in einem solchen Vorversuch beispielsweise wie folgt vorgehen:

Man erzeugt einen Aminoplast- bzw. Phenoplast-Untergrund der gleichen Art und gleich weit vorkondensiert wie für das Verfahren vorgesehen, nur mit dem Unterschied, daß sofort nach Erreichen des Soll-("B-Zustands")-Kondensationsgrades schockgekühlt und im Vakuum gefriergetrocknet wird.

Danach wird die Aminoplast- bzw. Phenoplast-B-Imprägnat-Probe mit einem Überschuß an dem für das Verfahren anzuwendenden PA-bzw. PE-Isocyanat-Lacksystem übergossen, auf Reaktionstemperatur gebracht und danach der

verbliebene Isocyanat-Überschuß, beispielsweise nach der Di-n-Butylamin-Methode, zurücktitriert.

Aus der Differenz des NCO-Verbrauches an der Schock-getrockneten Probe und einer ungetrockneten Probe ergibt sich der NCO-Verlust durch den Restwassergehalt des Aminoplast- bzw. Phenoplast-Untergrundes, welcher dem Isocyanat in der Vermischungs- und Grenzphase zugänglich und während der Aushärtungszeit reaktions-fähig ist.

Analog kann durch NCO-Titration an den PA- bzw. PE-Lackproben, welche verfahrensanalog als Mischung der Komponente 1 (= das PA-bzw. PE-Pigmente+Additive+Wasser-Lacksystem, das heißt inkl. der im Gemisch mit den Basispolymeren vorliegenden radikalisch polymerisierbaren Monomeren) und Komponente 2 (Isocyanat) hergestellt und genauso lang und bei gleicher Temperatur und gleichen Bedingungen, beispielsweise durch Umpumpen des Gemisches wie später an der Auftragswalze/Wanne vorgesehen, ausgesetzt waren, der Isocyanat-Verlust durch Nebenreaktionen im Lacksystem bestimmt werden.

Als Isocyanatkomponenten, das sind die sogenannten "Komponenten B" des Lacksystems werden bevorzugt aliphatische und/oder cycloaliphatische Di- oder Polyisocyanate verwendet. Es kommen vorzugsweise infrage: Hexamethylendiisocyanat (HMDI), Isophorondiisocyanat (IPDI) und deren intermolekulare Additionsprodukte wie Desmodur L oder N der Firma BAYER (Leverkusen), aber auch sogenannte verkappte Isocyanate wie "Desmodur AP stabil" der Firma BAYER (Leverkusen), insbesondere solche, die in wäßrigen Systemen bei Verarbeitungstemperatur aber unterhalb der Härtungstemperatur einige Zeit stabil bleiben, d.h. eine Topfzeit bei Raumtemperatur von mindestens 10 min, vorzugsweise von mindestens 1 Stunde, insbesondere mindestens 3 Stunden, aufweisen.

In einer weiteren Ausführungsform können anstelle freier Isocyanate auch Verbindungen verwendet werden, welche bei bzw. kurz unterhalb der Härtungstemperatur Isocyanatgruppen freisetzen oder ausbilden. Dies erfolgt derart, daß di- oder polyfunktionelle Isocyanate entstehen, vorzugsweise solche aus der Gruppe der aliphatischen und/oder cycloaliphatischen Isocyanate.

Die erfindungsgemäß einzusetzenden PA sind gesättigte Polyhydroxypolyacrylate, welclhe vorzugsweise in Wasser dispergierbar sind, und zwar Copolymere aus üblicherweise für die Herstellung von Acrylatlacken verwendeten Monomeren. Insbesondere kommen dafür folgende Monomeren infrage: C1- bis C8-Alkyl-Acrylate und/oder Methacrylate wie Methylacrylat (MA), Äthylacrylat (EA), n-Propyl- und/oder Isopropylacrylat (n/iPA), n-,iso- und/oder tert. Butylacrylat (n/i/tBA), 2-Äthyl-Hexylacrylat (2EHA) oder Methylmethacrylat (MMA); diese werden copolymerisiert mit Hydroxylgruppen-hältigen Acrylaten wie 2-Hydroxyäthylacrylat (2 HEA) in einer Menge von 5 bis 40 Mol% OH-Gruppen, vorzugsweise 15 bis 35 Mol% OH-Gruppen bezogen auf die durchschnittliche Monomereneinheit. Zur Verbesserung der Dispergierbarkeit in Wasser werden diese mit einem Gehalt an 5 bis 10 Mol%, insbesondere 2 - 6 Mol% Acrylsäureeinheiten und/oder Methacrylsäureeinheiten, versetzt.

Da bei den acrylischen Komponenten die Methacrylate, insbesondere das MMA zwar glasigere Decklackfilme bewirken, dabei aber zu einer gewissen Versprödung führen, werden diese in eher untergeordneten Mengen und zwar insbesondere nur im Bereich von 0 - 10 Mol-%, besonders bevorzugt im Bereich von 1 - 5 Mol-%, eingesetzt.

Die Alkylacrylate wirken umso mehr flexibilisierend bzw. elastifizierend, je längerkettiger die gewählten Alkylreste sind.

Somit kann durch entsprechende Monomeren-Kombination die jeweils gewünschte mechanische Eigenschaft der Beschichtung eingestellt bzw. Versprödung oder Spannungsrißbildung vermieden werden, wenn Verformung über enge Radien notwendig ist.

Die erfindungsgemäß einzusetzenden PE sind gesättigte Polyester, also Polykondensate aus üblicherweise für die Herstellung von gesättigten Polyestern verwendeten Monomeren wie Adipinsäure als Säurekomponente und Äthylenglycol (EG) und/oder Diäthylenglycol (DEG) und/oder Propylenglycol (PG) und/oder Dipropylenglycol (DPG) und/oder Butandiol (BD) und/oder Hexandiol (HD) als Alkoholkomponente. Zusätzlich können noch geringe Mengen von Vernetzungsmitteln wie Trimethylolpropan (TMP) und/oder Pentaerytrit (PER) einkondensiert werden, wobei der Gesamthydroxylgruppengehalt der Harze und deren beigemischter Vernetzungsmittel in Form von a) OH-Endgruppen zusammen mit b) den Ketten-mittelständigen OH-Gruppen (beispielsweise aus einkondensiertem TMP) im Vergleich zu den angewendeten Säurekomponenten so eingestellt wird, daß grundsätzlich PE-Harze mit OH-Endgruppen entstehen und außerdem der Gehalt an reaktionsfähigen OH-Gruppen (inklusive dieser Endgruppen) des PE-Systems bei 1 bis 15 Mol-%, vorzugsweise bei 1 bis 10 Mol-%, insbesondere bei 1 bis 5 Mol-% liegt. Bei Verwendung von PE-Harz-Gemischen gelten diese Bereiche für das gesamte System, d.h. für die Mengen-gewichteten Mittelwerte der Mol-% OH-Gruppen, gemittelt über alle PE-Harz-Komponenten des Systems.

Grundsätzlich bevorzugt sind jedoch Systeme mit Polyacrylaten als Harzen (sogenannte PA-Systeme).

Der auf diesen PA- bzw. PE-Harzen basierende erfindungsgemäß infragekommende 2-Komponenten-PA- oder PE-Lack ist eine Lackzubereitung, welche aus einer Mischung aus Isocyanat (= Komponente B) und der Komponente A (das PA- bzw. PE-System) besteht. Die Komponente A ist vorzugsweise ein Wasserlacksystem bestehend aus 40 bis 80 Gew-% Wasser, vorzugsweise aus 40 bis 60 Gew-% Wasser, neben 60 bis 20, vorzugsweise 60 bis 40 Gew.% Feststoffbildnern, wovon 0 bis 60 Gew.% (d.s. 0 bis 60x0,6=36 Gew.% bezogen auf Gesamtlack-Komponente-A-Zubereitung) Farbpigmenten und/oder UV-Stabilisatoren, neben 95 bis 45 Gew-% bezogen auf Gesamtlack-Komponente-A-Zubereitung) PA- bzw. PE-System, welches wiederum ein Gemisch ist aus PA- bzw. PE-Harz mit 1 - 30 Mol%,

vorzugsweise 2 - 10 Mol%, (insbesondere 3 - 5 MOl%, bezogen auf die mittlere Monomereneinheit im Basisharzmolekül) an radikalisch polymerisierbaren Monomeren. Der Rest besteht aus üblichen Stabilisier-, Dispergier-, Oberflächenspannungs-Reguliermitteln und Entschäummitteln, Viskositäts-Reguliermitteln und Verlaufshilfsmitteln, sowie in der Lacktechnik üblichen Mittel- und Hochsiedern.

In der Regel werden die beiden Lackkomponenten unter Ausnutzung der sogenannten Topfzeit erst vor Verarbeitung miteinander vereinigt.

In einer bevorzugten Ausführungsform werden sie erst unmittelbar beim Auftrag auf das zu beschichtende Substrat unter inniger Vermischung zusammengeführt.

Die radikalische Polymerisation zur Nachhärtung bzw. Nachvernetzung der PA- bzw. PE-Monomer-Systeme kann durch aktinische Strahlung wie Elektronenstrahlung oder - in Gegenwart üblicher Mengen sogenannter Photoinitiatoren - auch durch UV-Strahlung erfolgen. Bevorzugt ist die ausgelöste Polymerisation auf chemischem Wege mittels Radikalinitiatoren.

Dazu werden Radikalinitiatoren in üblichen Mengen - vorzugsweise unmittelbar beim Vermengen der Lackkomponenten A und B zugegeben.

Diese Radikalinitiatoren werden je nach deren gewünschter Reaktionstemperatur ausgewählt. Also im Falle, daß bereits radikalische Vernetzung während der urethanisierenden Nachtrocknung erfolgen soll, wird diese abgestimmt auf die angewendete Nachtrocknungstemperatur. Im bevorzugten Fall, daß die radikalische Vernetzung erst beim letzten Schritt, dem Aufpreßvorgang erfolgen soll, werden diese Radikalinitiatoren so ausgewählt, daß ihre Reaktionstemperatur deutlich oberhalb der Nachtrocknungs-temperatur, aber unterhalb der Verpressungstemperatur, liegt.

Besonders bevorzugt sind natürlich solche Radikalinitiatoren, die nicht zur Vergilbung bei Lichteinwirkung neigen, also aliphatische oder cycloaliphatische Systeme. Beispielsweise kommen als Radikalinitiatoren bei niedrigen Nachtrocknungstemperaturen Bis- $\alpha$ -azo-isobutyronitril, tert.Butyl-peroxy-2-ethylhexoat infrage, bei mittleren Nachtrocknungstemperaturen Di-cumyl-peroxid oder wenn erst Vernetzung beim Verpressen gewünscht ist, Radikalinitiatoren wie Di-ter.Butyl-Peroxid.

Nach dem Lackauftrag wird bei Temperaturen oberhalb der Reaktionstemperatur für die Urethanisierung nachgehärtet, und zwar vorzugsweise bei Temperaturen zwischen 100 und 180°C, insbesondere zwischen 110 und 150°C.

Die eingestellte Reaktions- und Trocknungstemperatur wird vorteilhafterweise so gewählt, daß einerseits Dampfblasenbildung vermieden wird und andererseits ein möglichst rascher und vollständiger Umsatz auch der Methylolgruppen aus dem Aminoplastuntergrund mit den Isocyanatgruppen erfolgt.

Die so erhaltenen Dekorfolien sind mit Aminoplast/Urethan-aminoplast bzw. Phenoplast/Urethanphenoplast-Harzen imprägnierte Trägerfilme wie Trägerpapiere oder Trägervliese. Sie weisens die 3-Stoff-3-Zonen-1-Schicht-Urethanaminoplast- bzw. Urethanphenoplast-Urethan-PA- bzw. -PE-Beschichtung auf.

Sie sind gut lager- sowie stapelfähig und können unmittelbar nach Herstellung oder auch erst nach längerer Lagerung weiterverarbeitet werden.

Bevorzugt ist die Lagerung bei Raumtemperatur über einen Zeitraum nicht länger als 6 Wochen, besonders bevorzugt nicht mehr als 14 Tage.

Die Luftfeuchtigkeit bei Lagerung sollte vorzugsweise nicht längere Zeit über 60% rel.LF, insbesondere nicht über 50% rel.LF liegen.

Im dritten und letzten Schritt wird das als eine einzige Folie vorgefertigte Beschichtungssystem auf das Trägermaterial - beispielsweise eine Schichtpreßstoff-, Span- oder Faserplatte - bei Temperaturen von mindestens 80°C, vorzugsweise bei Temperaturen zwischen 100 und 180°C, insbesondere bei Temperaturen zwischen 40 und 160°C und bei Drücken von mindestens 5 bar, vorzugsweise von mindestens 10 bar, insbesondere von mindestens 25 bar und einer Preßzeit, welche im Bereich von 30 Sekunden bis 10 Minuten und welche vorzugsweise von der angewandten Preßtemperatur T (in Grad Celsius) nach nachstehender Formel ausgewählt wird, aufgepreßt.

Dabei ergibt sich die Mindest-Preßzeit $_{min}t_p$ in Sekunden nach:

$$_{min}t_p = m + \frac{a}{b + T}$$

mit den Parametern:
m = - 600 b = -70
a = - 67.500

Die Erfindung wird durch nachstehendes Beispiel näher erläutert:

Ein imprägnierfähiges Trägerpapier von 100 g/m$^2$ (Natronkraftpapier gebleicht) wird mit einem wäßrigen (50 Gew% Feststoffanteil) Melamin-Formaldehydharz (Molverhältnis HCHO : Melamin = 2,5 : 1) auf einer kontinuierlichen Imprägnieranlage bis auf einen Harzgehalt von 100 g/m$^2$ (bezogen auf das Festharz) imprägniert und in einem Schwebe-Trockner bei einer Temperatur von 110°C (Trocknerstrecke: 6 m; Bandgeschwindigkeit 9 m/min) auf einen Restwassergehalt von 12 Gew-% (Bestimmung durch Trocknung: 2 Stunden im Vakuumtrockenschrank bei 80°C) vorgetrocknet

und vorkondensiert.

Das Imprägnat-Vorkondensat wies einen NCO-Titer (bestimmt nach der n-Butylamin-Rücktitrationsmethode) von 14 Milliäquivalenten NCO/m$^2$ auf.

Auf das aus dem Trockner kommende Band wird sofort in einer nächsten Station der Imprägnier-/Lackiermaschine ein 2-Komponenten-Acrylatlack (PA-Lack) in Form der vorgemischten Komponente-A bestehend aus PA-Lackharz + Pigmente + Monomere + Additive, insgesamt alles in wäßriger Dispersion mit insgesamt 50 Gew.% Gesamtfeststoffgehalt, davon 20 Gew-Teile Pigmente neben 5 Gew-Teilen Dispergiermitteln und Additiven, plus der unmittelbar vor dem Auftrag zu dieser Komponente A beigemischten Komponente B (d.i. das Isocyanat-System) aufgetragen.

Auftragsmenge: 75 g/m bezogen auf Lack-Feststoff-Inhalt nach Urethanisierung.

Da die radikalische Vernetzung erst beim Verpreßvorgang gewünscht wird, wird dem Lack unmittelbar bei Mischung der Komponenten A und B 1 Gew.% bezogen auf Feststoff- plus Lackharze-Inhalt an Di-tert.Butyl-Peroxyd zugegeben.

Nach dem Lackauftrag wird sofort durch einen Trocken-Aushärtungskanal mit folgendem Temperaturprofil gefahren: 5m unbeheizte Ablüftzone + 6m Schwebetrockner mit 125°C + 6 m Schwebetrockner mit 140°C, Fahrgeschwindigkeit: 12 m/min.

Es wird auf einen Restwassergehalt von 5 Gew.% eingestellt und dann der Film abgestapelt.

Als PA-System wurde verwendet: 75 Gewichtsteile eines Copolymerisates von 30 Mol% 2HEA ($C_5H_8O_3$, M=116) mit 40 Mo% EA ($C_5H_8O_2$, M=100)+ 12 Mol% BA ($C_7H_{12}O_2$, M=128), 4 Mol% HA ($C_9H_{16}O_2$, M=156), 8 Mol% MMA ($C_5H_8O_2$, M=100) und 6 Mol% AS ($C_3H_4O_2$, M=72), neben 25 Gewichtsteilen eines Gemisches von 2 Gewichtsteilen TMPDA ($C_{12}H_{18}O_5$, M=242,3) mit einem Gewichtsteil DPEHA ($C_{25}H_{32}O_{12}$, M=524,5).

Das mittlere Molekulargewicht der Monomereneinheit des Polyacrylates (des PA-Harzes) betrug somit: $p_AM_{Mon}$ = 108,7.

Das mittlere Molekulargewicht der radikalisch polymerisierbaren Monomeren betrug somit: 336,37.

Das PA-System enthielt somit 75/108,7 = 0,69 Mol-Teile PA neben 25/336,37 = 0,07 Mol-Teile Monomere; d.h. insgesamt somit 9,7 Mol% radikalisch polymerisierbare Monomere bezogen auf die mittleren Monomereneinheiten.

Diese ergaben die insgesamt 25 Gew-% an acrylischer Komponente des Gesamtfeststoffgehalts der Lackkomponente A.

Als Komponente B wurde ein trimeres Hexamethylendiisocyanat mit einem Molekulargewicht von M = 504, also einem NCO-Äquivalentgewicht von $_{Äqu}M_{NCO}$ = 168 verwendet.

Auf 10 kg Lackkomponente A, welche somit bei 50 Gew-% GesamtFeststoff, davon ab 20 Gew% Pigmente, sowie weiters ab 5% Additive, also netto 25 Gew% - d.s. 2,5 kg acrylische Komponente (PA-System) - enthielten; davon 75/100 = 1,88 kg PA entsprechend nach 1000x1,88/$_{PA}M_{Mon}$= 1880/108,7 = 17,3 Molen mittlerer Monomereneinheiten oder gemäß den 30 Mol%-OH-Haltigkeit aus dem 2HEA-anteil: 5,19 Molen Hydroxylgruppen; neben 25/100x2,5 = 0,63 kg Monomerer, davon 2/3, also 0,42 kg OH-hältige Monomere (aus dem TMPDA), d.s. 100x0,42/242,3 = 1,73 Mole weitere OH-Gruppen aus den Monomeren, also insgesamt 5,19+1,73 = 6,92 Mole Hydroxyol-gruppen; wurden unmittelbar an der Lack-Auftragswalze mittels einer 2-Komponenten-Dosierung und einer kurzen Turbo-Misch-strecke bei einer Wahl von 15 (A = 450; 15 = 450/30) Mol%-Isocyanat-Überschuß (Netto-Isocyanat-Überschuß), also mit 6,92 x 1,15 x $_{Äqu}M_{NCO}$ = 6,92 x 11,5 x 168 = 1,336 kg plus (aus der Bestimmung der zu erwartenden Isocyanat-Verluste durch Nebenreaktionen bekannten Summe aus Isocyanat-Verlusten = 1,3 g/m$^2$), also insgesamt 1336 + 1,3g/m$^2$x (10.000gKomp.A + ca.1.400g Komp.B)/150g/m$^2$ Naßlackauftrag) = 1336+99 g = 1,435 kg Isocyanat (Komponente B) verwendet.

In einem letzten Arbeitsgang wurde der Film in einer Kurztaktpresse auf eine 10 mm dicke Schichtpreßstoffplatte (aus Phenolharz-imprägniertem Papier) bei einer Temperatur von 150°C und einem Druck von 15 bar 6 Minuten lang aufgepreßt.

Es wurde eine Platte mit Kratzfestigkeit auf der pigmentierten Seite von 5 N erhalten.

Im Bewitterungstest nach BAM (Bundesamt für Materialprüfung in Berlin) ergaben sich auch nach 6 Monaten keinerlei sichtbare Oberflächen- oder Farbveränderungen, die nicht von der Pigmentierung herrührten.

An einem Teilstück der Platte, von dessen Oberfläche stufenförmig zuerst 70 µm abgeschliffen worden waren, ergaben sich nach 1000 Stunden QUV-Test keine sichtbaren Veränderungen; an der Teilfäche, wo 80 µm abgeschliffen wurde, war nur an einzelnen Punkten eine Vergrauung, an denen der Melaminharz-Untergrund voll bis an die Oberfläche durchdrang, allerdings ausgehend von diesen Punkten keinerlei Unterwanderung der benachbarten Zonen, erkennbar.

## Patentansprüche

1. Beschichtungsverfahren zur Herstellung eines dekorativen Formteils umfassend eine Kernschicht sowie diese ein- oder beidseitig umgebende witterungsbeständige Dekorschicht(en), welche Dekorschicht(en) einen durch

Urethanisierung herstellbaren Einschicht-Mehrzonen Verbundaufbau aufweisen, dadurch gekennzeichnet, daß in einem 1. Schritt auf eine Trägerfolie bestehend aus mit Isocyanatgruppen reaktionsfähigen Aminoplast- oder Phenoplast imprägnierten Trägermaterialien ein gesättigtes Hydroxylgruppen hältiges wasserdispergierbares Polyacrylat oder ein dementsprechender gesättigter Hydroxylgruppen-hältiger Polyester im Gemisch mit stöchiometrisch untergeordneten Mengen an radikalisch nachreagierbaren Monomeren zusammen mit einem Di- und/oder Poly-Isocyanat aufgebracht wird und daß in einem 2. Schritt die urethanisierende Vernetzung durch Reaktion der Hydroxylgruppen der Polymeren und eventuell eingesetzter Monomere in üblicher Weise durchgeführt wird und danach in einem 3. Schritt die radikalische Nachvernetzung der Doppelbindungen der acrylischen Monomeren bewirkt wird, wobei gleichzeitig mit dieser radikalischen Nachvernetzung oder danach dieses System auf das zu beschichtende Trägermaterial aufgepreßt wird.

2. Beschichtungsverfahren nach Anspruch 1 dadurch gekennzeichnet, daß ein Aminoplast-Untergrund verwendet wird, welcher ein noch mit Isocyanatgruppen reaktionsfähiges, bei Temperaturen oberhalb 80°C, vorzugsweise oberhalb 100°C noch fließfähiges Melaminharz, vorzugsweise in wäßriger Dispersion, aufweist.

3. Beschichtungsverfahren nach Anspruch 2, dadurch gekennzeichnet, daß das Aminoplastharz vorzugsweise ein Melamin-Formaldehydharz vor Auftrag des PA- bzw. des PE-Lack-Systems auf einen Gesamt-Wasser-Restgehalt von 5 bis 25 Gew-%, vorzugsweise auf 10 bis 15 Gew-%, zu einem immer noch in DMF löslichen Aminoplast vorgetrocknet wird.

4. Beschichtungsverfahren nach Anspruch 1 dadurch gekennzeichnet, daß ein Phenoplast-Untergrund verwendet wird, welcher ein noch mit Isocyanatgruppen reaktionsfähiges, bei Temperaturen oberhalb 80°C, vorzugsweise oberhalb 100°C fließfähiges Phenolharz, vorzugsweise in wäßriger Dispersion, aufweist.

5. Beschichtungsverfahren nach einem der Ansprüche 1 - 4, dadurch gekennzeichnet, daß der Aminoplast- bzw. Phenoplast-Untergrund bis zum Auftrag des PA- bzw. PE-Isocyanat-Systems nur so wenig vorkondensiert wird, daß er einen NCO-Titer von mindestens 3, vorzugsweise von mindestens 6, insbesondere von mindestens 7 Milliäquivalenten NCO pro Quadratmeter, aufweist.

6. Beschichtungsverfahren nach einem der Ansprüchen 1 - 5, dadurch gekennzeichnet, daß der Aminoplast- bzw. Phenoplast-Untergrund bis zum Auftrag des PA- bzw. PE-Isocyanat-Systems jedenfalls aber so weit vorkondensiert wird, daß er einen NCO-Titer von maximal 25, vorzugsweise von maximal 20, insbesondere von maximal 15 Milliäquivalenten NCO pro Quadratmeter, aufweist.

7. Beschichtungsverfahren nach einem der Ansprüche 1 - 6, dadurch gekennzeichnet, daß der angewandte Isocyanat-Überschuß eingestellt wird gemäß der Formel:

$$\text{Mol-\% NCO-Überschuß} = A / \text{Mol-\%OH},$$

wobei A eine Zahl zwischen 20 bis 500, vorzugsweise zwischen 200 und 400 ist und wobei Mol-%OH den Gehalt des eingesetzten Polyhydroxyacrylates bzw. Polyhydroxypolyesters an, mit Isocyanat-Gruppen reaktionsfähigen OH-Gruppen bedeutet.

8. Beschichtungsverfahren nach einem der Ansprüche 1 bis 7, dadurch gekennzeichnet, daß als Isocyanatkomponente ein aliphatisches und/oder ein cycloaliphatisches Di- oder Polyisocyanat verwendet wird.

9. Beschichtungsverfahren nach einem der Ansprüche 1 bis 7, dadurch gekennzeichnet, daß als Isocyanatkomponente eine Verbindung verwendet wird, welche bei bzw. kurz unterhalb der Urethanisierungstemperatur Isocyanatgruppen freisetzt oder ausbildet, vorzugsweise ausgewählt aus der Gruppe der aliphatischen und/oder cycloaliphatische Di- oder Poly-Isocyanate.

10. Beschichtungssverfahren nach einem den Ansprüche 1 - 9, dadurch gekennzeichnet, daß das Hydroxylgruppen-hältige Polyacrylat (PA) durch Copolymerisation von Monomeren des Typs der C1- bis C8-Alkyl-Acrylate und/oder Methacrylate neben 5 bis 40 Mol-%, vorzugsweise 15 bis 35 Mol-% Hydroxyalkyl-Acrylaten gebildet ist.

11. Beschichtungsverfahren nach Anspruch 10, dadurch gekennzeichnet, daß das PA durch Einbau geeigneter Comonomerer wasserdispergierbar ist, vorzugsweise durch den Einbau von 5 bis 10 Mol-%, insbesondere 2 bis 6 Mol-% Acrylsäure und/oder Methacrylsäure; bevorzugt ist Acrylsäure.

**12.** Beschichtungsverfahren nach einem der Ansprüche 10 oder 11, dadurch gennzeichnet, daß das Hydroxypolyacrylat als PA-System im Gemisch mit 1 - 30 Mol%, vorzugsweise 2 - 10 Mol%, insbesondere 3 - 5 Mol%, radikalisch polymerisierbaren Monomeren eingesetzt wird.

**13.** Beschichtungsverfahren nach Anspruch 12, dadurch gekennzeichnet, daß es sich bei den im Gemisch mit dem Hydroxypolyacrylat eingesetzten radikalisch polymerisierbaren Monomeren um Monomergemische handelt, vorzugsweise solche, die wenigstens 10 Mol% Hydroxylgruppen-hältige Acrylate darstellen.

**14.** Beschichtungssverfahren nach den Ansprüchen 1 - 9, dadurch gekennzeichnet, daß als Polyhydroxypolyester (PE) ein Polyester aus Dicarbonsäuren und/oder deren Anhydriden und 2-wertigen Alkoholen mit einem Gesamtgehalt (inklusive der Endgruppen) von 1 bis 15 Mol-%, vorzugsweise von 1 bis 10 Mol-%, insbesondere von 1 bis 5 Mol-% mit Isocyanatgruppen reaktionsfähigen OH-Gruppen verwendet wird.

**15.** Beschichtungsverfahren nach einem der Ansprüche 1 bis 14, dadurch gekennzeichnet, daß der Aminoplast- oder Phenoplast-Untergrund in Form eines mit Harz im B-Zustand getränkten Papiers, vorzugsweise eines Dekorpapiers, angewandt wird.

**16.** Beschichtungsverfahren nach einem der Ansprüche 1 bis 15, dadurch gekennzeichnet, daß das PA- oder PE-System in Form einer Lack-Zubereitung aufgetragen wird, welche aus einer möglichst unmittelbar vor Auftrag zubereiteten Mischung aus Isocyanat (Komponente B) und der Komponente A des PA- bzw. PE-Systems (letzteres enthaltend das PA- oder das PE-Harz neben dem radikalisch polymerisierbaren Monomeren), und ferner aus 40 bis 80 Gew-% Wasser, vorzugsweise aus 40 bis 60 Gew-% Wasser, neben 60 bis 20, vorzugsweise 60 bis 40 Gew-% Feststoffbildnern, wovon 0 bis 60 Gew-% (d.s. 0 bis 60x0,6=36 Gew% bezogen auf Gesamtlackzubereitung) Farbpigmente und/oder UV-Stabilisatoren sind, neben 95 bis 45 Gew%, (d.s. 60x0,95= 57 Gew% bis 20x0,95= 9, vorzugsweise bis 40x0,45= 18 Gew% bezogen auf Gesamtlackzubereitung) PA-bzw. PE-Harz und dem Rest an üblichen Stabilisier-, Dispergier- und Verlaufshilfsmitteln sowie in der Lacktechnik üblichen Mittel- und Hochsiedern besteht.

**17.** Beschichtungsverfahren nach einem der Ansprüche 1 bis 16, dadurch gekennzeichnet, daß die radikalische Nachvernetzung durch übliche Radikalinitiatoren ausgelöst wird, wobei diese Initiatoren vorzugsweise der Lackzubereitung unmittelbar vor Auftrag beigegeben werden.

**18.** Beschichtungsverfahren nach einem der Ansprüche 1 bis 16, dadurch gekennzeichnet, daß die radikalische Nachvernetzung durch aktinische Strahlung, vorzugsweise Elektronenstrahlung, ausgelöst wird.

**19.** Beschichtungsverfahren nach einem der Ansprüche 1 bis 16, dadurch gekennzeichnet, daß die radikalische Nachvernetzung durch UV-Strahlung in Verbindung mit üblichen Photoinitiatoren die dem System vor Auftrag und Bestrahlung in üblichen Mengen beigegeben werden, ausgelöst wird.

**20.** Beschichtungsverfahren nach einem der Ansprüche 1 bis 19, dadurch gekennzeichnet, daß das Aufpressen der Primärfolien auf den zu beschichtenden Untergrund bei Temperaturen oberhalb von 80°C, vorzugsweise zwischen 100 und 200°C, und bei Drücken von mindestens 4 bar, vorzugsweise mindestens 10 bar, insbesondere von mindestens 15 bar erfolgt.

**21.** Beschichtungsverfahren nach einem der Ansprüche 1 bis 20, dadurch gekennzeichnet, daß das Aufpressen der Primärfolien auf dem zu beschichtenden Untergrund mit einer Preßzeit, welche von der angewandten Preßtemperatur (T in Grad Celsius) abhängt nach nachstehender Formel, erfolgt:

$$_{min}t_p = m + \frac{a}{b + T} \text{ Sekunden}$$

mit den Parametern:
m = - 600
a = - 26.500
b = - 70

**22.** Urethanaminoplast dadurch gekennzeichnet, daß ein nur teilweise ausreagierter Aminoplast, vorzugsweise ein solcher gemäß den Ansprüchen 5 und 6, mit di- und/oder polyfunktionellen Isocyanaten in Anwesenheit eines Hydroxylgruppen-hältigen PA- oder PE-Harzes und gegebenenfalls auch Hydroxylgruppen-hältigen Monomerenacrylaten umgesetzt wird, wobei ein stöchiometrischer Überschuß von Isocyanat gemäß Anspruch 7 angewendet wird.